# EUROPÄISCHE PATENTSCHRIFT

(11) **EP 1 967 392 B1**
(45) Veröffentlichungstag und Bekanntmachung des Hinweises auf die Patenterteilung: **20.01.2010**
(21) Anmeldenummer: 08102361.6
(22) Anmeldetag: 06.03.2008
(51) Int. Cl.: B60C 25/02

(54) **Vorrichtung zum Montieren eines Reifens auf eine Radfelge**
Device for mounting a tyre on a wheel rim
Dispositif de montage d'une roue sur une jante

(30) Priorität: 09.03.2007 DE 202007003570 U
(43) Veröffentlichungstag der Anmeldung: 10.09.2008
(73) Patentinhaber: Robert Bosch GmbH, 70442 Stuttgart (DE)
(72) Erfinder: Werner, Oliver, 80469 München (DE)

(56) Entgegenhaltungen:
- EP-A- 1 724 128
- GB-A- 1 314 962

## Beschreibung

Bei herkömmlichen Felgenklemmen, die an einer Felgenschulter fixiert werden, um den Reifen auf die Radfelge zu montieren bzw. aufzuziehen, ergibt sich häufig das Problem, dass der Reifenwulst beim Montieren des Reifens auf die Radfelge beschädigt oder zerschnitten wird. Dieses Problem tritt verstärkt bei LKW-Radfelgen mit breiter Felgenschulter, zum Beispiel sogenannten Super-Singles und bei Radfelgen mit scharfkantigem Felgenhorn auf.

Aus der gattungsbildenden EP 1 724 128 A1 ist eine Vorrichtung zum Montieren eines Reifens auf einer Radfelge mit einem Grundkörper und einem Seitenwand-Führungselement bekannt. Das Seitenwand-Führungselement weist eine feststehende Klemmbacke zum Anlegen an eine Seite einer Felgenschulter und eine verschiebbare Klemmbacke, die gegen die feststehende Klemmbacke verschiebbar und durch die eine Feststellkraft ausübbar ist, auf.

Bei der aus GB 1314 962 A bekannten Vorrichtung zum Montieren eines Reifens auf einer Radfelge ist eine Felgenklemme vorgesehen, die an einer Felgenschulter fixiert wird, um den Reifen auf die Radfelge zu montieren bzw. aufzuziehen. Die Felgenklemme hält dabei den Reifen während des Montierens im Felgenbett.

Es ist daher Aufgabe der vorliegenden Erfindung, eine Vorrichtung zum Montieren eines Reifens auf eine Radfelge anzugeben, mit der ein Reifen schonend und beschädigungsfrei auf eine Radfelge montiert werden kann.

Diese Aufgabe wird durch den Gegenstand des unabhängigen Anspruchs gelöst. Vorteilhafte Weiterbildungen ergeben sich aus den abhängigen Ansprüchen.

Die erfindungsgemäße Vorrichtung zum Montieren eines Reifens auf eine Radfelge umfasst einen Grundkörper mit einem Reifenseitenwand-Führungsetement und mit einer feststehenden Klemmbacke zum Anlegen an eine erste Seite der Felgenschulter, insbesondere an eine Innenseite der Felgenschulter, sowie eine verschiebbare Klemmbacke, die gegen die feststehende Klemmbacke verschiebbar ist und durch die eine gegen die feststehende Klemmbacke oder gegen eine vor der feststehenden Klemmbacke angeordnete Felgenschulter gerichtete Feststellkraft ausübbar ist. Der Grundkörper umfasst des weiteren ein seitlich an ihm angeordnetes Führungselement mit einer abgerundeten Oberfläche für den Reifenwulst. Wenn sich die erfindungsgemäße Vorrichtung in einer fixierten Position bezüglich der Radfelge befindet, bei der die feststehende Klemmbacke und die verschiebbare Klemmbacke an gegenüberliegenden Seiten der Felgenschulter anliegen und die Felgenschulter mit einer Feststellkraft beaufschlagen und die Felgenschulter so dazwischen einspannen, deckt das Führungselement einen Bereich des Felgenhorns ab, sodass der Reifenwulst beim Montieren des Reifens über das Führungselement und insbesondere über dessen abgerundete Oberfläche geführt wird.

Unter feststehender Klemmbacke ist in dieser Erfindung eine feste Klemmbacke zu verstehen, die an die Felgenschulter angelegt wird, und die beim Vorgang des Fixierens der Vorrichtung im Gegensatz zur verschiebbaren Klemmbacke ortsfest bleibt. In einer Ausführungsform kann die feststehende Klemmbacke vor dem Fixierungsvorgang einstellbar sein, um die erfindungsgemäße Vorrichtung an verschiedene Radfelgen-Reifen-Kombinationen anzupassen. Zum Beispiel kann die feststehende Klemmbacke in verschiedenen Positionen einrastbar sein oder es können verschiedene in eine Aussparung des Grundkörpers einsteckbare feststehende Klemmbacken vorgesehen werden.

Das Reifenseitenwand-Führungselement verläuft in der fixierten Position der Vorrichtung bezüglich der Radfelge im Wesentlichen in radialer Richtung nach außen. Das Reifenseitenwand-Führungselement ermöglicht es, die Reifenseitenwand bei der Montage zu führen und den Reifenwulst auf einer Seite der erfindungsgemäßen Vorrichtung innerhalb des Felgenhorns und der Felgenschulter zu halten, und das Reifenseitenwand-Führungselement verhindert es, dass die Reifenseitenwand aus dem Felgenbett rutscht.

Gemäß einem Grundgedanken der Erfindung werden Beschädigungen und Schnitte im Reifenwulst zuverlässig vermieden, weil der Reifenwulst an dem unmittelbar hinter der erfindungsgemäßen Vorrichtung liegenden Traktionspunkt, an dem der Reifenwulst sehr hohen Belastungen ausgesetzt ist, nicht mit den Felgenhorn in Kontakt kommt, sondern über die abgerundete Oberfläche des Reifenwulst-Führungselements geführt wird. Es ergibt sich somit eine beschädigungsfreie und schonende Montage von Reifen auf eine Radfelge.

Der kritische Reifenwulst des zu montierenden Reifens ist zumeist der zweite Reifenwulst, der nach dem relativ problemlos montierbaren ersten Reifenwulst auf eine Radfelge montiert wird.

Die erfindungsgemäße Vorrichtung zum Montieren eines Reifens auf eine Radfelge ist generell für sämtliche Radfelgen-Reifen-Kombinationen und insbesondere für die Montage von LKW-Reifen auf LKW-Radfelgen geeignet. Ganz besonders eignet sich die erfindungsgemäße Vorrichtung zum Montieren eines Reifens auf eine Radfelge für die beschädigungsfreie und schonenden Montage von Radfelgen mit breiter Felgenschulter, zum Beispiel sogenannten Super-Singles, und für Radfelgen mit scharfkantigem Felgenhorn.

In einer ersten Ausführungsform der Erfindung ist das Reifenwulst-Führungselement ein Rohrsegment, das so bemessen ist, dass es einen Bereich des Felgenhorns abdeckt und so den Reifenwulst unter Vermeidung eines direkten Kontakts mit dem Felgenhorn führt.

Gemäß einer weiteren Ausführungsform der Erfindung ist das Reifenwulst-Führungselement ein integraler Bestandteil des Grundkörpers. Insbesondere ist der Grundkörper mit dem Reifenwulst-Führungselement aus einem Gußelement gebildet, oder das Reifenwulst-Führungselement ist seitlich an den Grundkörper angeschweißt.

In einer alternativen Ausführungsform hierzu ist das Reifenwulst-Führungselement an den Grundkörper festgeschraubt. Diese Ausführungsform ermöglicht es, das Reifenwulst-Führungselement auszutauschen und Reifenwulst-Führungselemente mit unterschiedlicher Länge oder mit unterschiedlicher Oberfläche je nach Radfelgen-Reifen-Kombination vorzusehen.

In einer weiteren Ausführungsform der Erfindung umfasst die Vorrichtung weiterhin einen Schraubhebel mit einem Gewinde, der durch eine ebenfalls mit einem Gewinde versehenen Bereich des Grundkörpers verläuft. Durch Drehen des Schraubhebels kann die verschiebbare Klemmbacke gegen die feststehende Klemmbacke gepresst und somit die Felgenschulter zwischen die beiden Klemmbacken eingespannt und mit einer Feststellkraft beaufschlagt werden. Bei dieser Ausführungsform der Erfindung kann die erfindungsgemäße Vorrichtung einfach und zuverlässig an der Felgenschulter befestigt und wieder von dieser gelöst werden.

Gemäß einer weiteren Ausführungsform der Erfindung kann der mit einem Gewinde versehene Bereich des Grundkörpers ein Schraubhebel-Führungselement sein. Dieses Schraubhebel-Führungselement kann insbesondere drehbar ausgeführt sein, um so die Richtung der Kraftbeaufschlagung durch den Schraubhebel einstellen zu können.

Gemäß einer weiteren Ausführungsform der Erfindung ist die verschiebbare Klemmbacke Teil eines um eine in dem Grundkörper liegende Schwenkachse schwenkbaren Schwenkelements, das durch das Vorderende des Schraubhebels mit einer Verschiebungs- und Feststellkraft beaufschlagbar ist. Dabei ist von Vorteil, dass die Klemmbacke selbst nicht gedreht wird, wodurch eine besonders stabile Fixierung der Vorrichtung an der Felgenschulter erreicht wird und Schleifspuren an der Außenseite der Felgenschulter vermieden werden können.

Gemäß einer weiteren Ausführungsform der Erfindung weist die verschiebbare Klemmbacke eine Rückstellfeder auf, die sie aus der fixierten Position löst, wenn der Schraubhebel nicht mehr an der verschiebbare Klemmbacke anliegt, und so ein einfaches Entfernen der erfindungsgemäßen Vorrichtung von einer Radfelge ermöglicht.

Gemäß einer weiteren Ausführungsform der Erfindung ist das Reifenseitenwand-Führungselement Teil eines Bügels des Grundkörpers, der in der an der Radfelge fixierten Position der erfindungsgemäßen Vorrichtung in im Wesentlichen radialer Richtung von dem Grundkörper nach außen steht. Durch diesen Bügel ergibt sich ein besonders stabiler Aufbau der erfindungsgemäßen Vorrichtung und die Reifenseitenwand wird durch diesen Bügel zuverlässig geführt.

Die Erfindung ist nachfolgend anhand von Ausführungsbeispielen mit Bezug auf die beiliegenden Figuren näher erläutert.
- Fig. 1: zeigt eine perspektivische Seitenansicht einer ersten Felgenklemme in ihrer Ruheposition gemäß einem Ausführungsbeispiel der Erfindung;
- Fig. 2: zeigt eine perspektivische Ansicht der ersten Felgenklemme aus Fig. 1 in ihrer Ruheposition von unten;
- Fig. 3: zeigt einen Ausschnitt einer Radfelge mit der an der Felgenschulter fixierten ersten Felgenklemme gem. Fig. 1 und 2 sowie eines Reifens beim Montieren auf die Radfelge.
- Fig. 4: zeigt eine perspektivische Seitenansicht der Radfelge und des Reifens aus Fig. 3, eines Montagewerkzeugs sowie von zwei an der Felgenschulter fixierten Felgenklemmen beim Montieren des Reifens auf die Radfelge.

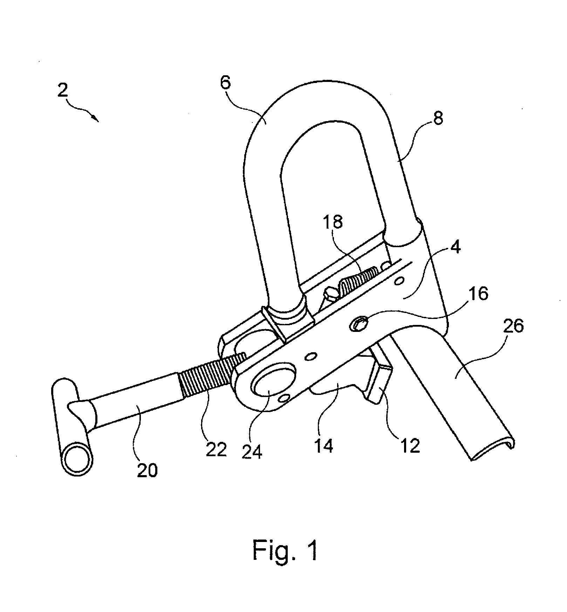

Fig. 1 zeigt eine perspektivische Seitenansicht einer ersten Felgenklemme 2 in ihre Ruheposition. Die erste Felgenklemme 2 umfasst eine Grundkörper 4, der zwei längliche, in etwa formgleiche, zueinander parallel verlaufende und voneinander beabstandete Platten aufweist, die an ihrem vorderen Ende und in einem hinteren Bereich miteinander verbunden sind. An diesen Verbindungsbereichen steht nach oben ein massiver Bügel 6 ab, der in etwa die vierfache Höhe des Grundkörpers 4 hat. Die vordere Bügelstange bildet ein Reifenseitenwand-Führungselement 8.

Nach hinten aus dem Zwischenraum zwischen den beiden Platten des Grundkörpers 4 herausstehend, ist ein Schraubhebel 20 mit einem Schraubgewinde 22 angeordnet, das durch ein Gewinde eines Schraubhebel-Führungselements 24 verläuft. Dieses zylindrische Schraubhebel-Führungselements 24 erstreckt sich in einem hinteren Bereich des Grundkörpers 4 durch die beiden Platten und den Zwischenraum des Grundkörpers 4.

Vor dem Schraubhebel 20 ist in dem Zwischenraum zwischen den beiden Platten des Grundkörpers 4 ein Schwenkelement 14 angeordnet, das um eine Schwenkachse 16, die durch die beiden Platten des Grundkörpers 4 und den Zwischenraum verläuft, schwenkbar gelagert ist. Ein unterer Bereich des Schwenkelements 14 steht nach unten aus dem Zwischenraum zwischen den beiden Platten des Grundkörpers 4 heraus und umfasst an seinem vorderen Ende eine verschiebbare Klemmbacke 12. Zwischen dem rückwärtigem Ende des vorderen Verbindungsstücks der beiden Platten des Grundkörpers 4 und dem oberen Ende des Schwenkelements 14 ist eine Rückstellfeder 18 angeordnet, die das Schwenkelement 14 und die verschiebbare Klemmbacke 12 in die Ruheposition bewegt und dort hält, wenn die erste Felgenklemme 2 nicht an einer Radfelge fixiert ist und wenn der Schraubhebel 20 herausgedreht ist.

Ein rohrsegmentförmiges seitliches Reifenwulst-Führungselement 26 ist an dem unteren Vorderende der rechten Platte des Grundkörpers 4 angeschweißt und erstreckt sich von der Grundplatte aus in etwa rechtwinklig zur Seite. Das seitliche Reifenwulst-Führungselement 26 hat in dem Ausführungsbeispiel eine Breite von 60 bis 100 mm, vorzugsweise von in etwa 80 mm, und eine Wandstärke von 2 bis 4 mm, vorzugsweise von in etwa 2,5 mm.

An dem vorderen Verbindungsstück der beiden Platten des Grundkörpers 4 ansetzend und sich in der Verlängerung des Reifenseitenwandführungselements 8 nach unten erstreckend, ist eine integrale Klemmbacke 10 angeordnet, die der verschiebbaren Klemmbacke 12 gegenüberliegt und die in der Fig.1 durch das seitliche Reifenwulst-Führungselement 26 verdeckt ist.

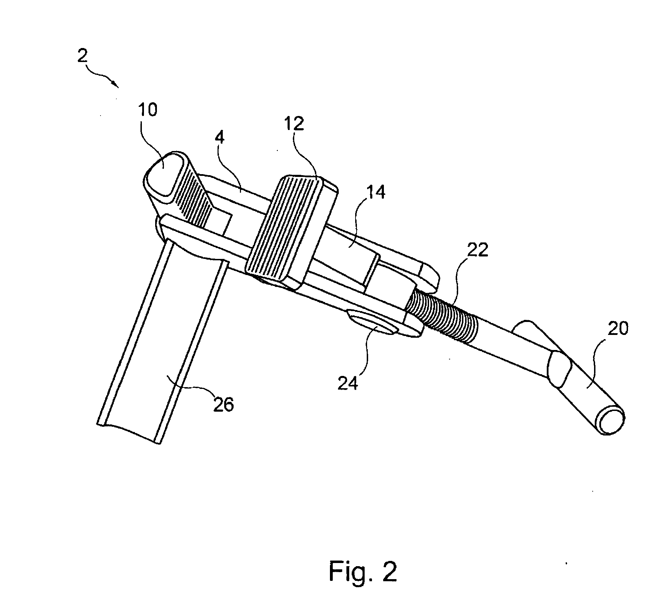

Fig. 2 zeigt eine perspektivische Ansicht der ersten Felgenklemme 2 in ihrer Ruheposition von unten.

In der Fig. 2 ist die nach unten aus dem Grundkörper 4 hervorstehende integrale Klemmbacke 10 mit ihrer nach hinten gerichteten Klemmseite zu sehen. Die verschiebbare Klemmbacke 12 weist auf ihrer Klemmseite eine quer geriffelte Kontur auf. Des weiteren ist die Innenseite des rohrförmigen Reifenwulst-Führungselements 26 dargestellt.

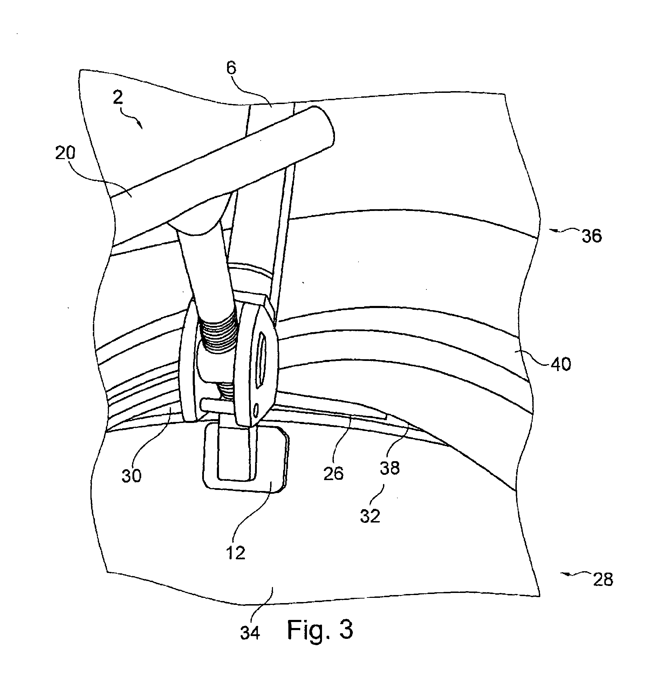

Fig. 3 zeigt einen Ausschnitt einer Radfelge 28 mit der an der Felgenschulter 32 fixierten ersten Felgenklemme 2 sowie eines Reifens 36 beim Montieren auf die Radfelge 28.

Bei der Radfelge 28 handelt es sich um eine LKW-Radfelge, und bei dem Reifen 36 um einen LKW-Reifen.

Die Radfelge 28 umfasst zwei Felgenhörner, von denen in Fig. 3 ein Felgenhorn 30 zu sehen ist, zwei in etwa radial verlaufende Felgenschultern, von denen in Fig. 3 eine Felgenschulter 32 zu sehen ist, und das Tiefbett 34. Der Reifen 36 umfasst seine Reifenseitenwand 40 und seinen Reifenwulst 38.

In Fig. 3 ist die erste Felgenklemme 2 in ihrer an der Felgenschulter 32 fixierten Position dargestellt. Dabei liegt die feststehende Klemmbacke 10 an der Innenseite der Felgenschulter 32 an, was in Fig. 3 nicht zu sehen ist, und die verschiebbare Klemmbacke 12 liegt an der Außenseite der Felgenschulter 32 an. Der Schraubhebel 20 ist so weit mit seinem Schraubgewinde 22 in das Schraubhebel-Führungselement 24 herein gedreht, dass die verschiebbare Klemmbacke 12 gegen die Außenseite der Felgenschulter 32 und die feststehende Klemmbacke 10 gegen die Innenseite der Felgenschulter 32 gepresst werden, sodass sich die erste Felgenklemme 2 bezüglich der Radfelge 28 in einer fixierten Position befindet.

Der Bügel 6 steht in etwa in radialer Richtung von der Radfelge 28 nach außen. Das seitliche Reifenwulst-Führungselement 26 erstreckt sich in Fig. 3 nach rechts von dem Grundkörper 4 der ersten Felgenklemme 2 und deckt den darunter liegenden Bereich des Felgenhorns 30 ab.

In der in Fig. 3 gezeigten Montagesituation verläuft der links von der ersten Felgenklemme 2 angeordnete Bereich des Reifenwulsts 38 bereits innerhalb des Felgenhorns 30, der rechts von der ersten Felgenklemme 12 verlaufende Bereich des Reifenwulsts 38 und der Reifenseitenwand 40 verläuft außerhalb des Felgenhorns 30. Unmittelbar rechts von der ersten Felgenklemme 2 überquert der Reifenwulst 38 das Felgenhorn 30 über das seitliche Reifenwulst-Führungselement 26 und kommt somit nur mit dessen abgerundeter Oberseite, nicht aber direkt mit dem Felgenhorn 30 in Kontakt. Dieser Punkt wird auch als Traktionspunkt bezeichnet. An diesem ist der Reifenwulst 38 sehr hohen Belastungen ausgesetzt.

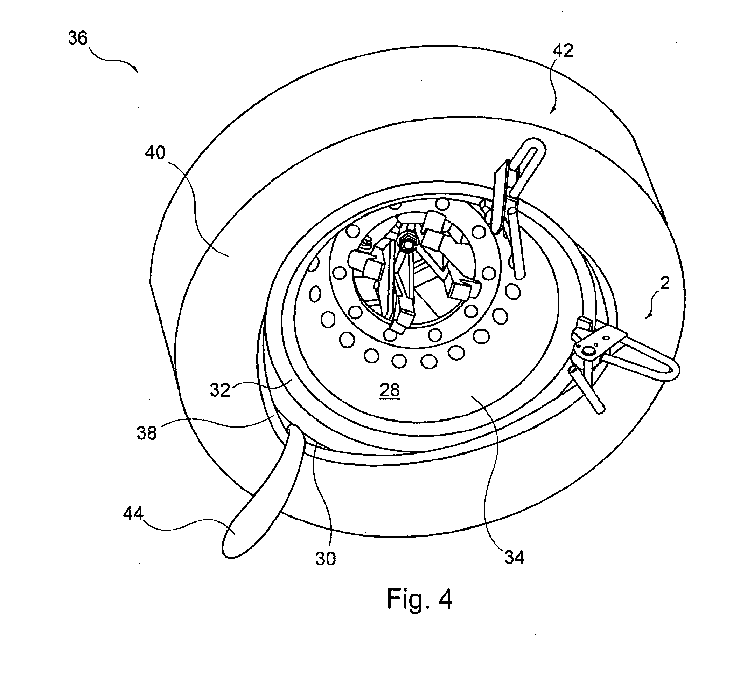

Fig. 4 zeigt eine perspektivische Seitenansicht der Radfelge 28 und des Reifens 36, eines Montagewerkzeugs 44 sowie von zwei an der Felgenschulter 32 fixierten Felgenklemmen 2, 42 beim Montieren des Reifens 36 auf die Radfelge 28.

Die Radfelge 28 ist mittels eines Spannwerkzeugs 46 auf einem Tragarm (nicht gezeigt) befestigt. Des Weiteren ist die erste Felgenklemme 2 auf der 3-Uhr-Position der Radfelge 28 und eine zweite Felgenklemme 42 in etwa auf der 12-Uhr-Position fixiert. Ungefähr auf der 7 Uhr 30-Position ist ein Montagewerkzeug 44 zu erkennen, das den Reifenwulst 38 über das Felgenhorn 30 führt.

Das seitliche Reifenwulst-Führungselement 26 der zweiten Felgenklemme 42 ist in Fig. 4 in der Position dargestellt, in der der Reifenwulst 38 nicht darüber verläuft, sondern dort bereits im Felgenbett sitzt.

Die zweite Felgenklemme 42 hat grundsätzlich den gleichen Aufbau wie die erste Felgenklemme 2, braucht aber kein seitliches Reifenwulst-Führungselement 26 zu haben. Das seitliche Reifenwulst-Führungselement 26 der ersten Felgenklemme 2 ist durch ihren Grundkörper 4 verdeckt und daher nicht zu erkennen. Der Reifenwulst 38 wird durch das seitliche Reifenwulst-Führungselement 26 der ersten Felgenklemme 2 über das Felgenhorn 30 geführt.

Nachfolgend ist das Verfahren zum Montieren des Reifens 36 auf die Radfelge 28 beschrieben.

Zunächst werden die Reifenwulste mit Gleitmittel versehen, und das Rad wird mittels des Spannwerkzeugs 46 auf den Tragarm eines Montiergeräts eingespannt. Dann wird der erste Wulst des Reifens 36, der in den Fig. 3 und 4 nicht zu erkennen ist, auf herkömmliche, dem Fachmann bekannte Weise auf die Radfelge 28 montiert.

Dann wird die erste Felgenklemme 2 in etwa auf der 6-Uhr-Position befestigt, indem die integrale Klemmbacke 10 an die Innenseite der Felgenschulter 32 angelegt und durch Drehen des Schraubhebels 20 die verschiebbare Klemmbacke 12 an die Außenseite der Felgenschulter 32 und die feststehende Klemmbacke 10 an die Innenseite der Felgenschulter 32 angepresst werden. Die erste Felgenklemme 2 wird nun auf die 9 Uhr-Position gedreht.

An dieser Stelle kann es, insbesondere bei problematischen Radfelgen-Reifen-Kombinationen, erforderlich sein, eine zweite Felgenklemme 42 anzubringen.

Anschließend wird das Montagewerkzeug 44 direkt unterhalb der ersten Felgenklemme 2 angesetzt, um den Reifenwulst 38 über das Felgenhorn 30 zu führen.

Dann wird die Radfelge 28 im Uhrzeigersinn gedreht, und zu Beginn der Drehung führt das Reifenseitenwand-Führungselement 8 der ersten Felgenklemme 2 die Reifenseitenwand 40. Der Reifenwulst 38 überquert rechts von der ersten Felgenklemme 2 über deren seitliches Reifenwulst-Führungselement 26 das Felgenhorn 30, ohne mit diesen direkt in Berührung zu kommen.

Das Rad wird weiter gedreht, und ab einem Drehwinkel von etwa 200° bzw. einer Klemmenposition von 2 Uhr muss der dem Montagewerkzeug 44 gegenüberliegende Reifenwulst 38 ins Tiefbett rutschen, damit das Montagewerkzeug 44 den Reifenwulst 38 über das Felgenhorn 30 heben kann, ohne den Reifen 36 zu beschädigen. Ab diesem Winkel ist der Reifenwulst 38 hohen Belastungen ausgesetzt. Die Reifenseitenwand 40 nimmt eine konkave Form ein, die auch als Hohlkehle bezeichnet wird.

Die Radfelge 28 wird nun weiter gedreht, bis der verbleibende Bereich des Reifenwulsts 38 zwischen dem Montagewerkzeug 44 und dem seitlichen Reifenwulst-Führungselement 26 der ersten Felgenklemme 2 ins Felgenbett rutscht. Dabei ist darauf zu achten, dass der Reifenwulst 38 im gesamten Bereich vom Felgenhorn 30 ferngehalten werden sollte.

Durch den Einsatz der erfindungsgemäßen Felgenklemme 2 mit seitlichem Seitenwulst-Führungselement 26 wird der Reifenwulst 38 nicht direkt über das Felgenhorn, sondern vielmehr über die abgerundete Oberfläche des Reifenwulst-Führungselements 26 geführt. Dadurch können Schnitte und Beschädigungen des Reifenwulsts 38 zuverlässig vermieden werden, und bei der Reifenmontage können eine niedrigere Ausschussrate und eine verbesserte Qualität erreicht werden.

Wie in Fig. 4 gezeigt, können auch zwei Felgenklemmen 2 und 42 versetzt an der Felgenschulter 32 befestigt werden, dies ist insbesondere bei problematischen Radfelgen-Reifen-Kombinationen von Vorteil.

## Patentansprüche

1. Vorrichtung (2) zum Montieren eines Reifens (36) auf eine Radfelge (28), umfassend:
einen Grundkörper (4) mit einem Reifenseitenwand-Führungselement (8) und mit einer feststehenden Klemmbacke (10) zum Anlegen an eine erste Seite der Felgenschulter (32);
eine verschiebbare Klemmbacke (12), die gegen die feststehende Klemmbacke (10) verschiebbar und durch die eine Feststellkraft ausübbar ist,
**dadurch gekennzeichnet, dass** der Grundkörper (4) ein Reifenwulst-Führungselement (26) umfasst, das seitlich an dem Grundkörper (4) angeordnet ist und das eine abgerundete Oberfläche für den Reifenwulst (38) aufweist, so dass in einer fixierten Position der Vorrichtung (2) bezüglich der Radfelge (28), in der die feststehende Klemmbacke (10) und die verschiebbare Klemmbacke (12) an der Felgenschulter (32) anliegen und diese mit einer Feststellkraft beaufschlagen, das Reifenwulst-Führungselement (26) einen Bereich des Felgenhorns (30) abdeckt und der Reifenwulst (38) beim Montieren des Reifens (36) über das Reifenwulst-Führungselement (26) verläuft.

2. Vorrichtung nach Anspruch 1, wobei das Reifenwulst-Führungselement (26) ein Rohrsegment ist.

3. Vorrichtung nach Anspruch 1 oder 2, wobei das Reifenwulst-Führungsetement (26) integraler Bestandteil des Grundkörpers (4) ist.

4. Vorrichtung nach Anspruch 1 oder 2, wobei das Reifenwulst-Führungselement (26) an dem Grundkörper (4) festgeschraubt ist.

5. Vorrichtung nach einem der Ansprüche 1 bis 4, wobei ein Schraubhebel (20) mit einem Gewinde (22) vorgesehen ist, der durch einen ebenfalls mit einem Gewinde versehenen Bereich des Grundkörpers (4) verläuft, wobei die verschiebbare Klemmbacke (12) durch das Drehen des Schraubhebels (20) gegen die feststehende Klemmbacke (10) bewegbar und die Felgenschulter (32) mit einer Feststellkraft beaufschlagbar ist.

6. Vorrichtung nach Anspruch 5, wobei der mit einem Gewinde versehene Bereich des Grundkörpers (4) ein Schraubhebel-Führungselement (24) ist.

7. Vorrichtung nach Anspruch 5 oder 6, wobei die verschiebbare Klemmbacke (12) Teil eines um eine Schwenkachse (16) schwenkbaren Schwenkelements (14) ist und wobei das Schwenkelement (14) durch das Vorderende des Schraubhebels (20) mit einer Verschiebungs- und Feststellkraft beaufschlagbar ist.

8. Vorrichtung nach einem der Ansprüche 5 bis 7, wobei die verschiebbare Klemmbacke (12) eine Rückstellfeder (18) aufweist.

9. Vorrichtung nach einem der Ansprüche 1 bis 8, wobei das Reifenseitenwand-Führungselement (8) Teil eines Bügels (6) des Grundkörpers (4) ist.

## Claims

1. Apparatus (2) for mounting a tyre (36) on a wheel rim (28), comprising:
a basic body (4) with a tyre side wall guiding element (8) and with a stationary clamping jaw (10) for bearing against a first side of the rim shoulder (32); a displaceable clamping jaw (12) which can be displaced against the stationary clamping jaw (10) and by way of which a fixing force can be exerted, **characterized in that** the basic body (4) comprises a tyre bead guiding element (26) which is arranged laterally on the basic body (4) and which has a chamfered surface for the tyre bead (38), with the result that, in a fixed position of the apparatus (2) with regard to the wheel rim (28), in which fixed position the stationary clamping jaw (10) and the displaceable clamping jaw (12) bear against the rim shoulder (32) and load the latter with a fixing force, the tyre bead guiding element (26) covers a region of the rim flange (30) and the tyre bead (38) extends over the tyre bead guiding element (26) during mounting of the tyre (36).

2. Apparatus according to Claim 1, the tyre bead guiding element (26) being a tubular segment.

3. Apparatus according to Claim 1 or 2, the tyre bead guiding element (26) being an integral constituent part of the basic body (4).

4. Apparatus according to Claim 1 or 2, the tyre bead guiding element (26) being screwed fixedly to the basic body (4).

5. Apparatus according to one of Claims 1 to 4, a screw lever (20) being provided with a thread (22) which extends through a region of the basic body (4), which region is likewise provided with a thread, it being possible for the displaceable clamping jaw (12) to be moved against the stationary clamping jaw (10) by the rotation of the screw lever (20) and for the rim shoulder (32) to be loaded with a fixing force.

6. Apparatus according to Claim 5, that region of the basic body (4) which is provided with a thread being a screw lever guiding element (24).

7. Apparatus according to Claim 5 or 6, the displaceable clamping jaw (12) being part of a pivoting element (14) which can be pivoted about a pivot axis (16), and it being possible for the pivoting element (14) to be loaded with a displacing and fixing force by the front end of the screw lever (20).

8. Apparatus according to one of Claims 5 to 7, the displaceable clamping jaw (12) having a restoring spring (18).

9. Apparatus according to one of Claims 1 to 8, the tyre side wall guiding element (8) being part of a hoop (6) of the basic body (4).

## Revendications

1. Dispositif (2) pour monter un pneu (36) sur une jante (28), comprenant :
un corps de base (4) avec un élément de guidage de la paroi latérale du pneu (8) et une mâchoire de serrage fixe (10) destinée à s'appliquer contre un premier côté de la portée du talon (32) ;
une mâchoire de serrage mobile (12), qui peut être déplacée par rapport à la mâchoire de serrage fixe (10) et qui permet d'exercer une force de fixation, **caractérisé en ce que** le corps de base (4) comprend un élément de guidage du talon du pneu (26), qui est disposé latéralement sur le corps de base (4) et qui présente une surface arrondie pour le talon du pneu (38), de sorte que dans une position fixée du dispositif (2) par rapport à la jante (28), dans laquelle la mâchoire de serrage fixe (10) et la mâchoire de serrage mobile (12) s'appliquent contre la portée du talon (32) et la sollicitent avec une force de fixation, l'élément de guidage du talon du pneu (26) recouvre une région du rebord de jante (30) et le talon du pneu (38), lorsque le pneu (36) est monté, s'étend sur l'élément de guidage du talon du pneu (26).

2. Dispositif selon la revendication 1, dans lequel l'élément de guidage du talon du pneu (26) est un segment tubulaire.

3. Dispositif selon la revendication 1 ou 2, dans lequel l'élément de guidage du talon du pneu (26) fait partie intégrante du corps de base (4).

4. Dispositif selon la revendication 1 ou 2, dans lequel l'élément de guidage du talon du pneu (26) est vissé fixement sur le corps de base (4).

5. Dispositif selon l'une quelconque des revendications 1 à 4, dans lequel un levier de vissage (20) est pourvu d'un filetage (22), qui s'étend à travers une région du corps de base (4) également pourvue d'un filetage, la mâchoire de serrage mobile (12) pouvant être déplacée par la rotation du levier de vissage (20) contre la mâchoire de serrage fixe (10) et la portée du talon (32) pouvant être sollicitée avec une force de fixation.

6. Dispositif selon la revendication 5, dans lequel la région du corps de base (4) pourvue d'un filetage est un élément de guidage du levier de vissage (24).

7. Dispositif selon la revendication 5 ou 6, dans lequel la mâchoire de serrage mobile (12) fait partie d'un élément pivotant (14) pouvant pivoter autour d'un axe de pivotement (16) et dans lequel l'élément de pivotement (14) peut être sollicité par l'extrémité avant du levier de vissage (20) avec une force de déplacement et de fixation.

8. Dispositif selon l'une quelconque des revendications 5 à 7, dans lequel la mâchoire de serrage mobile (12) présente un ressort de rappel (18).

9. Dispositif selon l'une quelconque des revendications 1 à 8, dans lequel l'élément de guidage de la paroi latérale du pneu (8) fait partie d'un étrier (6) du corps de base (4).
